# EUROPEAN PATENT APPLICATION

(11) **EP 4 772 914 A1**
(43) Date of publication of application: **08.07.2026**
(21) Application number: 24860479.5
(22) Date of filing: 30.08.2024
(51) Int. Cl.: G01T 7/02, G01T 1/02

(54) **SYSTEM AND METHOD FOR COLLECTING AND EVALUATING CHARACTERISTICS OF LARGE CONCRETE CONTAINER WALL BLOCK SAMPLE**

(30) Priority: 01.09.2023 KR 20230116442
(71) Applicant: Korea Hydro & Nuclear Power Co., Ltd, Gyeongju-si, Gyeongsangbuk-do 38120 (KR)
(72) Inventor: HWANG, Young Hwan, Daejeon 34101 (KR); YOON, Ji-Soo, Daejeon 34101 (KR); SON, Jung-Kwon, Daejeon 34101 (KR); KIM, Cheon-Woo, Daejeon 34101 (KR)
(74) Representative: Winter, Brandl - Partnerschaft mbB
(86) International application number: PCT/KR2024/013093
(87) International publication number: WO 2025/048563

(57) **Abstract**

A method for sampling and characterizing a large concrete container wall block according to an embodiment of another aspect of the present disclosure includes cutting at least a portion of a large concrete container to form a concrete container wall block, placing the concrete container wall block inside a sampling and characterization space provision device, detaching the detachable surface dose rate measuring device and the detachable sampling device disposed in the sampling and characterization space provision device and moving the detachable surface dose rate measuring device and the detachable sampling device so as to have a predetermined distance from the concrete container wall block, placing the detachable surface dose rate measuring device and the detachable sampling device so that the detachable surface dose rate measuring device and the detachable sampling device do not interfere with each other with respect to the concrete container wall block, and placing a plurality of the detachable surface dose rate measuring devices and the detachable sampling devices in a spaced-apart manner.

## Description

### [Technical Field]

### CROSS-REFERENCE TO RELATED APPLICATION

This application claims priority to and the benefit of Korean Patent Application No. 10-2023-0116442 filed with the Korean Intellectual Property Office on September 1, 2023, the entire contents of which are incorporated herein by reference.

### [Background Art]

The present disclosure relates to a system and a method for sampling and characterizing a large concrete container wall block, and more particularly, to a system and a method for sampling and characterizing a large concrete container wall block capable of quantifying appropriate sampling and characterization in order to quickly perform self-disposal of a large concrete wall block with slight contamination.

Generally, large concrete containers containing high-dose concentrated waste liquids and high-dose waste resins are stored long-term in a radioactive waste storage facility.

The large concrete containers contain a radioactive waste drum inside, and there are concrete wall blocks with a thickness of about 10 cm outside the large concrete containers.

The concrete wall blocks of the large concrete containers require characterization for self-disposal or disposal at a disposal site as radioactive waste.

In particular, some concrete wall blocks have slight contamination levels that allow for self-disposal, and if they may be promptly self-disposed, the amount of radioactive waste may be reduced.

Therefore, a device capable of quantifying appropriate sampling and characterization to enable rapid self-disposal of concrete wall blocks with slight contamination levels that allow self-disposal is required.

### [Disclosure]

### [Technical Problem]

The present disclosure has been devised to solve problems such as those cited above, and attempts to provide a system and a method for sampling and characterizing a large concrete container wall block capable of effectively performing disposal and self-disposal of radioactive waste by cutting and dismantling a large concrete container containing high-dose concentrated waste liquid and high-dose waste resin stored in a radioactive waste storage, and obtaining upper/lower/side quadrangle concrete wall blocks.

In addition, the present disclosure attempts to provide a system and a method for sampling and characterizing a large concrete container wall block capable of efficiently performing characterization and sampling, and in particular, capable of facilitating sampling so that the contamination level is minimal enough to enable rapid self-disposal, thereby activating the disposal and self-disposal of radioactive waste.

### [Technical Solution]

A system for sampling and characterizing a large concrete container wall block according to an embodiment of the present disclosure includes a detachable surface dose rate measuring device that is detachably installed around the large concrete container wall block, and a detachable sampling device that is detachably installed around the concrete container wall block and is rotatable with respect to the concrete container wall block so as to enable sampling.

A method for sampling and characterizing a large concrete container wall block according to an embodiment of another aspect of the present disclosure includes cutting at least a portion of a large concrete container to form a concrete container wall block, placing the concrete container wall block inside a sampling and characterization space provision device, detaching a detachable surface dose rate measuring device and a detachable sampling device disposed in a sampling and characterization space provision device and moving the detachable surface dose rate measuring device and the detachable sampling device so as to have a predetermined distance from the concrete container wall block, placing the detachable surface dose rate measuring device and the detachable sampling device so that the detachable surface dose rate measuring device and the detachable sampling device do not interfere with each other with respect to the concrete container wall block, and placing a plurality of the detachable surface dose rate measuring devices and the detachable sampling devices in a spaced-apart manner.

The detachable surface dose rate measuring device and the detachable sampling device may be spaced apart from each other on the side surface, top, and bottom of the large concrete container wall block.

At least two load cells may be spaced apart at the bottom of the large concrete container wall block so as to measure the mass of the large concrete container wall block.

### [Advantageous Effects]

According to a system and a method for sampling and characterizing a large concrete container wall block of an embodiment of the present disclosure, it is possible to effectively perform disposal and self-disposal of radioactive waste by cutting and dismantling a large concrete container containing high-dose concentrated waste liquid and high-dose waste resin stored in a radioactive waste storage facility, and obtaining upper/lower/side quadrangle concrete wall blocks.

In addition, according to the system and the method for sampling and characterizing the large concrete container wall block of an embodiment of the present disclosure, it is possible to efficiently perform characterization and sampling, and in particular, it is possible to facilitate sampling so that the contamination level is minimal enough to enable rapid self-disposal, thereby activating the disposal and self-disposal of radioactive waste.

According to the system for sampling and characterizing the large concrete container wall block of an embodiment of the present disclosure, it is possible to rapidly perform sampling for characterization of the large concrete container wall block using a detachable surface dose rate measuring device and a detachable sampling device, measure a quantified surface dose rate so as to prove the representativeness of a sample, and flexibly respond to the size of the large concrete container wall block.

### [Description of the Drawings]

FIG. 1 is a top plan view of the top of a system for sampling and characterizing a large concrete container wall block according to an embodiment of the present disclosure;
FIG. 2 is a drawing of the top seen from inside FIG. 1;
FIG. 3 is a drawing of the bottom seen from inside FIG. 1;
FIG. 4 is a drawing of a wall block of a concrete container disposed within the system for sampling and characterizing the large concrete container wall block of FIG. 1;
FIG. 5 is a drawing of a detachable sampling device and a surface dose rate measuring device moved to face the wall block of the concrete container for sampling and surface dose rate measurement;
FIG. 6 is a conceptual diagram illustrating the structure of the detachable sampling device and the detachable surface dose rate measuring device of FIG. 1; and
FIG. 7 is a flowchart illustrating a method for sampling and characterizing a large concrete container wall block according to an embodiment of the present disclosure.

### [Mode for Invention]

Hereinafter, the present disclosure will be described in detail with reference to the accompanying drawings, in which embodiments of the present disclosure are shown. As those skilled in the art would realize, the described embodiments may be modified in various different ways, all without departing from the spirit or scope of the present disclosure.

In addition, unless explicitly stated to the contrary, the word "comprise," and variations such as "comprises" and "comprising," should be understood to imply the inclusion of stated elements but not the exclusion of any other elements.

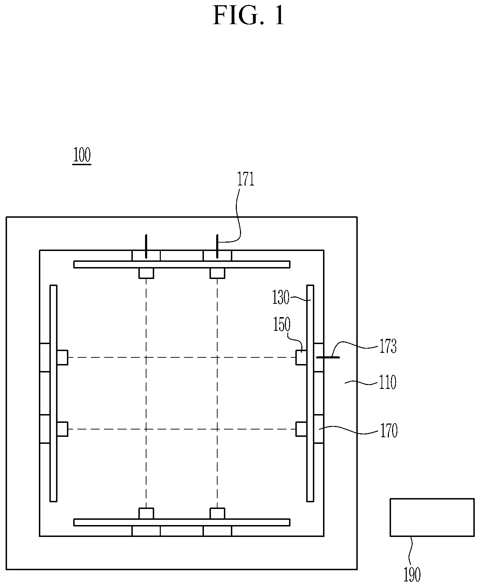

Hereinafter, a system for sampling and characterizing a large concrete container wall block according to an embodiment of the present disclosure will be described in detail with reference to FIGS. 1 to 6.

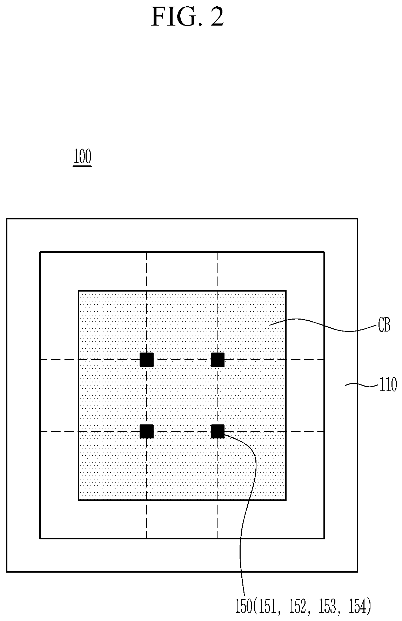

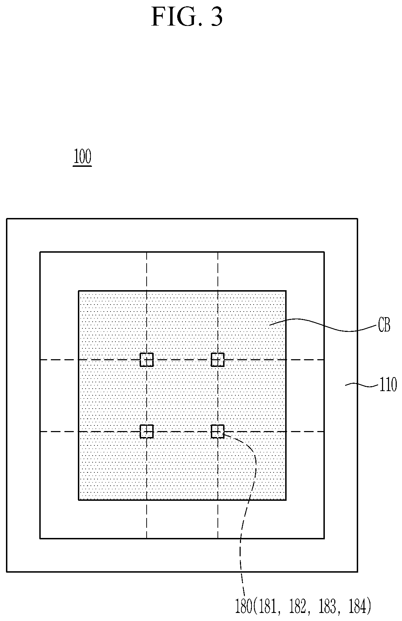

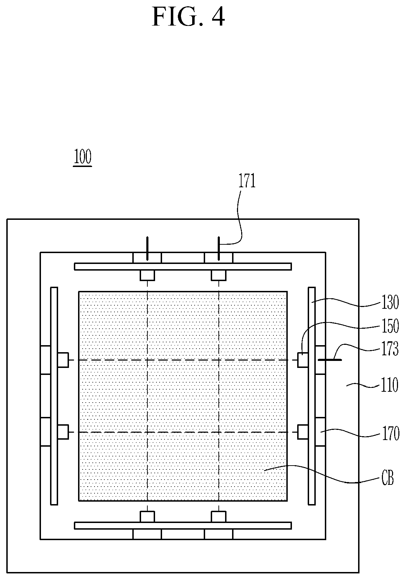

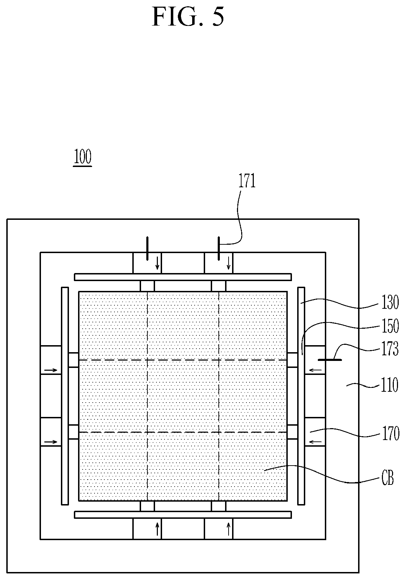

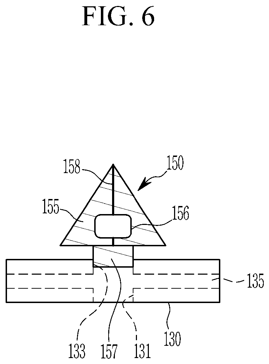

FIG. 1 is a top plan view of the top of a system for sampling and characterizing a large concrete container wall block according to an embodiment of the present disclosure; FIG. 2 is a drawing of the top seen from inside FIG. 1; FIG. 3 is a drawing of the bottom seen from inside FIG. 1; FIG. 4 is a drawing of a wall block of a concrete container disposed within the system for sampling and characterizing the large concrete container wall block of FIG. 1; FIG. 5 is a drawing of a detachable sampling device and a surface dose rate measuring device moved to face the wall block of the concrete container for sampling and surface dose rate measurement; and FIG. 6 is a conceptual diagram illustrating the structure of the detachable sampling device and the detachable surface dose rate measuring device of FIG. 1.

As shown in FIG. 1, a system for sampling and characterizing a large concrete container wall block 100 according to an embodiment of the present disclosure includes a sampling and characterization space provision device 110 that is configured to correspond to the shape of the large concrete container. When a cross-section of the concrete container has a circular or rectangular shape, the device is formed to have a corresponding circular or rectangular cross-section. The device is configured to have a diameter or width larger than that of the cross-section of the concrete container so as to easily accommodate a large concrete container wall block CB formed by cutting the top of the large concrete container. The sampling and characterization space provision device 110 is openable and closable and provides a closed space during sampling and characterization. The system for sampling and characterizing the large concrete container wall block 100 further includes a detachable surface dose rate measuring device 130 that is detachably installed around the large concrete container wall block CB, a detachable sampling device 150 having an internal cavity, detachably installed around the large concrete container wall block CB, and rotatable with respect to the large concrete container wall block CB so as to enable sampling.

The detachable surface dose rate measuring device 130 or the detachable sampling device 150 may be movably fixed to the inner side surface provided by the sampling and characterization space provision device 110 by a movable fixing device 170.

The movable fixing device 170 may include a detachable fixing part 171 that is detachably fixed to the sampling and characterization space provision device 110, and a moving part 173 for moving and fixing the detachable surface dose rate measuring device 130 or the detachable sampling device 150 to the concrete container wall block.

The detachable fixing part 171 may be various male and female fastening means corresponding to a measuring panel detachable/coupling part 133 or a sampling detachable part 159 described later.

As shown in FIGS. 2 and 6, the detachable surface dose rate measuring device 130 may include a measuring panel 131 having a corresponding circular or rectangular shape corresponding to the top shape of the large concrete container when the top shape of the concrete container is circular or rectangular, the measuring panel detachable/coupling part 133 to which the movable fixing device 170 or the detachable sampling device 150 is detachably coupled, and a surface dose rate measurement controller 135 that controls the surface dose rate measurement of the surface dose rate measuring device 130.

The measuring panel detachable/coupling part 133 may be a male and female fastening means corresponding to the male and female fastening means of the movable fixing device 170 or the detachable sampling device 150.

The measuring panel 131 of the detachable surface dose rate measuring device 130 may be installed facing the large concrete container wall block CB so as to measure the surface dose rate, thereby proving the representativeness of the characterization for the large concrete container wall block CB.

As shown in FIG. 2 and FIG. 6, the sampling device 150 is disposed in a plurality of sampling devices 151, 152, 153, and 154 at a certain interval for the large concrete container wall block CB, and likewise, may prove the representativeness of the characterization for the large concrete container wall block CB.

Preferably, in this specification, the sampling device 150 may be installed such that the first to fourth sampling devices 151, 152, 153, and 154 are spaced apart from each other by about 50 cm with respect to the top of the sampling and characterization space provision device 110, and the measuring panel 131 of the detachable surface dose rate measuring device 130 may be spaced apart from the concrete container wall block by about 50 cm.

The detachable sampling device 150 may be detachably installed on one side surface of the sampling and characterization space provision device 110 so as not to interfere with the measurement of the detachable surface dose rate measuring device 130.

That is, the detachable sampling device 150 may be detached from the detachable surface dose rate measuring device 130 so as not to interfere with the measurement of the detachable surface dose rate measuring device 130 and independently spaced apart from the top of the large concrete container wall block CB as shown in FIG. 2.

The detachable sampling device 150 has a cone-shaped tip 155 that penetrates the concrete container wall block CB while rotating to enable sampling, and may further include an internal receiving part 156 that forms an internal space in which a sample collected through the tip 155 is collected, a rotary driver 157 that rotates the tip 155, a moving path 158 that moves the sample collected through the tip 155 from the tip 155 to the internal receiving part 156, and the sampling detachable part 159 that couples the detachable sampling device 150 to the detachable surface dose rate measuring device 130 or to the sampling and characterization space provision device 110, providing fixed support during sampling, and which is detachable after sampling.

When the tip 155 of the detachable sampling device 150 is rotated by the rotary driver 157, sampling may be effectively achieved from the internal receiving part 156 through the moving path 158.

The detachable sampling device 150 is installed at a desired location by the sampling detachable part 159 and is disposed at an appropriate location on the side/upper/lower side of the concrete container wall block CB to achieve effective sampling.

The sampling detachable part 159 may be a variety of male and female fastening means.

As shown in FIG. 3, the system for sampling and characterizing the large concrete container wall block 100 according to an embodiment of the present disclosure may further include a load cell device 180 capable of measuring the mass of the large concrete container wall block CB at the bottom of the sampling and characterization space provision device 110.

The load cell device 180 may be provided detachably to the bottom of the sampling and characterization space provision device 110 so as to accurately measure the mass of the large concrete container wall block CB, and may include first to fourth load cells 181, 182, 183, and 184 spaced apart at a predetermined distance, preferably about 50 cm, from each other around the center of gravity of the large concrete container wall block CB.

As shown in FIG. 4, for example, the top of a large concrete container C may be cut to form the large concrete container wall block CB, and disposed inside the sampling and characterization space provision device 110 of the system for sampling and characterizing the large concrete container wall block 100 according to an embodiment of the present disclosure.

The sampling and characterization space provision device 110 includes a space part 111 that provides a sampling and characterization space and a cover part 113 that seals the space part 111 so that the cover part 113 may be open and the large concrete container wall block CB may be installed.

The sampling and characterization space provision device 110 may have at least one side surface 111 or top surface 113 open or exposed to facilitate installation of the large concrete container wall block CB, and the open at least one side surface 111 may be closed by the top surface 113.

As shown in FIG. 5, the detachable surface dose rate measuring device 130 and the detachable sampling device 150, which are detachably installed on each side surface of the sampling and characterization space provision device 110, may be detached using the detachable fixing part 171 and moved by the moving part 173, thereby enabling measurement of the surface dose rate of the concrete container wall block CB and sampling.

The detachable surface dose rate measuring device 130 and the detachable sampling device 150 may be moved and installed by the movable fixing device 170 so as to have an appropriate distance from the concrete container wall block CB, and the appropriate distance from the concrete container wall block CB may be provided to prove the representativeness of the characterization for the concrete container wall block CB.

The detachable surface dose rate measuring device 130 or the detachable sampling device 150 may be configured to be detachable at a predetermined location so as to prevent interference with each other, and may be configured to be detachable at the predetermined location so as to increase the reliability of measurement.

In addition, the detachable sampling device 150 disposed at the appropriate location may provide representative sampling of the concrete container wall block CB, thereby effectively achieving sampling for radioactive waste disposal and self-disposal.

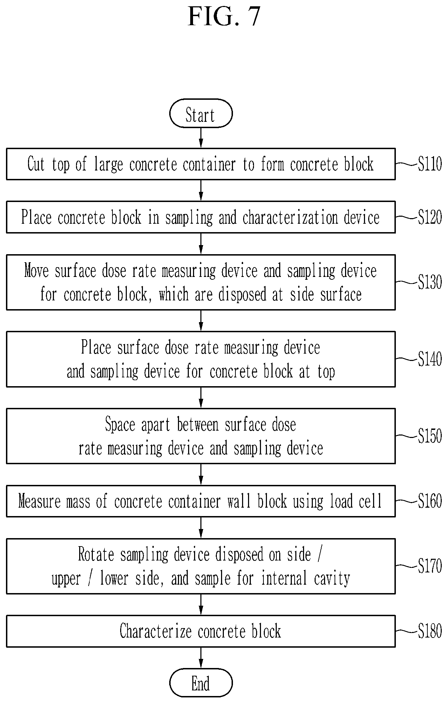

Referring to FIG. 7, a method for sampling and characterizing a large concrete container wall block according to an embodiment of the present disclosure will be described.

The method for sampling and characterizing the large concrete container wall block according to an embodiment of the present disclosure includes cutting the top of the large concrete container C to form the concrete container wall block CB (S110), and placing the concrete container wall block CB inside the sampling and characterization space provision device 110 of the system for sampling and characterizing the large concrete container wall block 100 according to an embodiment of the present disclosure (S120).

The detachable surface dose rate measuring device 130 and the sampling device 150 disposed on the side surface of the sampling and characterization space provision device 110 are detached and moved so as to be at a predetermined distance from the concrete container wall block CB (S130).

The detachable surface dose rate measuring device 130 and the detachable sampling device 150 are disposed so as not to interfere with each other with respect to the concrete container wall block CB (S140).

The detachable surface dose rate measuring device 130 and the detachable sampling device 150 are spaced apart from each other so that they each have representativeness (S150).

The mass of the concrete container wall block CB is measured using the load cell device 180 for the concrete container wall block (S160).

The tip 155 of the detachable sampling device 150 disposed on the side/upper/lower side of the concrete container wall block CB is rotated by the rotary driver 157 to sample for the internal receiving part 156 through the moving path 158 (S170).

The surface dose rate measured by the detachable surface dose rate measuring device 130 for the concrete container wall block CB, the mass of the concrete container wall block measured by the load cell device 180, and the sample collected by the detachable sampling device 150 are used to perform a characterization of the concrete container wall block (S180).

### [Industrial Applicability]

According to a system and a method for sampling and characterizing a large concrete container wall block of an embodiment of the present disclosure, it is possible to effectively perform disposal and self-disposal of radioactive waste by cutting and dismantling a large concrete container containing high-dose concentrated waste liquid and high-dose waste resin stored in a radioactive waste storage facility, and obtaining upper/lower/side rectangular concrete wall blocks.

In addition, according to the system and the method for sampling and characterizing the large concrete container wall block of an embodiment of the present disclosure, it is possible to efficiently perform characterization and sampling, and in particular, it is possible to facilitate sampling so that the contamination level is minimal enough to enable rapid self-disposal, thereby activating the disposal and self-disposal of radioactive waste.

According to the system and the method for sampling and characterizing the large concrete container wall block of an embodiment of the present disclosure, it is possible to rapidly perform sampling for characterization of the large concrete container wall block using a detachable surface dose rate measuring device and a detachable sampling device, measure a quantified surface dose rate so as to prove the representativeness of a sample, and flexibly respond to the size of the large concrete container wall block.

## Claims

1. A system for sampling and characterizing a large concrete container wall block, comprising: a detachable surface dose rate measuring device that is detachably installed around a large concrete container wall block; and a detachable sampling device that is detachably installed around the concrete container wall block and is rotatable with respect to the concrete container wall block so as to enable sampling.

2. The system for sampling and characterizing the large concrete container wall block of claim 1, wherein
the large concrete container wall block is formed by cutting a certain thickness of a large concrete container, which is radioactive waste, and
the large concrete container wall block sampling and characterization system further comprises: a sampling and characterization space provision device in which the large concrete container wall block is disposed and an internal space for sampling and characterization of the large concrete container wall block is provided; and
a movable fixing device for detachably and movably fixing the detachable surface dose rate measuring device or the detachable sampling device to the large concrete container wall block.

3. The system for sampling and characterizing the large concrete container wall block of claim 2, wherein
the detachable surface dose rate measuring device is disposed at a certain distance from the large concrete container wall block by the movable fixing device, and is movably installed on the upper, lower, left, and right side surfaces of the large concrete container wall block.

4. The system for sampling and characterizing the large concrete container wall block of claim 3, wherein
the detachable sampling device is disposed in plurality so as to be spaced apart from each other and approach the large concrete container wall block, and is disposed so as not to interfere with each other with respect to the detachable surface dose rate measuring device, and
the large concrete container wall block sampling and characterization system comprises: a cone-shaped tip that penetrates the concrete container wall block to facilitate sampling, an internal receiving part that forms an internal space in which a sample collected through the tip is collected, and a rotary driver that rotates the tip.

5. The system for sampling and characterizing the large concrete container wall block of claim 2, further comprising:
at least two load cell devices for measuring the mass of the large concrete container wall block.

6. A method for sampling and characterizing a large concrete container wall block, comprising:
cutting at least a portion of a large concrete container to form a concrete container wall block;
placing the concrete container wall block inside a sampling and characterization space provision device,
detaching the detachable surface dose rate measuring device and the detachable sampling device disposed in the sampling and characterization space provision device and moving the detachable surface dose rate measuring device and the detachable sampling device so as to have a predetermined distance from the concrete container wall block;
placing the detachable surface dose rate measuring device and the detachable sampling device so that the detachable surface dose rate measuring device and the detachable sampling device do not interfere with each other with respect to the concrete container wall block; and
placing a plurality of the detachable surface dose rate measuring devices and the detachable sampling devices in a spaced-apart manner.

7. The method for sampling and characterizing the large concrete container wall block of claim 6, comprising:
measuring the mass of the concrete container wall block using a load cell device at the bottom of the concrete container wall block;
rotating a tip of the detachable sampling device disposed on the side surface or the top and the bottom of the concrete container wall block to collect a sample for an internal receiving part; and
performing a characterization of the concrete container wall block using a surface dose rate measured by the detachable surface dose rate measuring device for the concrete container wall block, the mass of the concrete container wall block measured by the load cell device, and a sample collected by the detachable sampling device.
